(19)

Europäisches
Patentamt
European
Patent Office
Office européen
des brevets

(11) **EP 2 757 750 A1**

(12) **EUROPEAN PATENT APPLICATION**

(43) Date of publication:
**23.07.2014 Bulletin 2014/30**

(51) Int Cl.:
***H04L 25/02*** (2006.01)

(21) Application number: **13305042.7**

(22) Date of filing: **16.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Wild, Thorsten**
**70435 Stuttgart (DE)**

• **Rheinschmitt, Rupert**
**70825 Korntal (DE)**
• **Nguyen, Le Hang**
**70839 Gerlingen (DE)**

(74) Representative: **2SPL Patentanwälte PartG mbB**
**Postfach 15 17 23**
**80050 München (DE)**

Remarks:
Amended claims in accordance with Rule 137(2) EPC.

(54) **Apparatuses, methods, and computer programs for a channel estimator and a base station transceiver**

(57) Embodiments provide apparatuses, methods, and computer programs for a channel estimator and a base station transceiver. The base station transceiver apparatus 10 comprises a receiver module 12 operable to receive radio signals from a mobile transceiver 300 using repetitive radio frames and one or more memory modules 14 operable to store samples of receive signals. The base station transceiver apparatus 10 further comprises a channel estimation module 16 operable to estimate a radio channel between the mobile transceiver 300 and the base station transceiver 100 based on stored samples of receive signals and reconstructed transmit symbols.

Fig. 1

EP 2 757 750 A1

## Description

Embodiments of the present invention relate to wireless mobile communications, more particularly but not exclusively to channel estimation of radio channels.

Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics. For example, highly dynamic load statistics result, where the average load is increasing.

To further increase spectral efficiency and reliability of wireless communications systems, base station cooperation, or "Coordinated MultiPoint (CoMP)", has become a major trend in physical layer research. Channel estimation algorithms for CoMP schemes in the uplink, i.e. when performing diversity combining using distributed antennas at the base station side, are a factor in determining the gain or benefits of CoMP. The quality of the channel estimation can be important for achieving spectral efficiency and satisfying cell edge rates. Especially in the case of multi-cell coordination (CoMP transmission and reception) it is known that the channel estimation quality is crucial for useful CoMP performance.

Summary

Embodiments are based on the finding that channel estimation can be carried out in a pilot-aided manner. For pilot-aided channel estimation a high-end classical linear channel estimator is the Linear Minimum Mean Square Error (LMMSE) estimator, also referred to as Wiener filter. It is a finding that knowledge on the receive signal statistics (receive auto-and cross covariance matrix) and noise variance is used in such a channel estimator.

In "Limits of Channel Estimation and Signal Combining for Multipoint Cellular Radio (CoMP)", L.-H. Nguyen, R. Rheinschmitt, T. Wild, S.T. Brink, in proceedings of IEEE ISWCS'11, Aachen, November 2011, the authors show that "harvesting" these statistics takes long "warm-up times" of about 200 Time Transmission Intervals (TTIs), until the MMSE really becomes useful under the low Signal-to-Interference-and-Noise Ratio (SINR) operation point of CoMP. It is a further finding that an improved concept for channel estimation may be desirable.

The estimation of the channel may further be carried out data-aided. Data-aided channel estimation may exploit data symbols to improve channel estimation and it may use the turbo principle for iterative channel estimation. Starting with an initial channel estimate, the link level receive processing provides soft bits at the decoder output. Those soft bits may be used (e.g. by transforming them into hard data symbol hypothesizes) in a second stage to achieve a better channel estimate. Further iterations can provide potentially improved soft bits. This can be repeated until a maximum number of iterations is reached or a Cyclic Redundancy Check (CRC) is successful, showing that the code block was received correctly. Such iterative channel estimation depends on the quality of the initial estimation, which e.g. may be an MMSE estimate. Thus its quality may also be determined by a good initial pilot-aided estimate. Often, iterative channel estimation may be regarded as too complex for certain applications. Furthermore, once a code block is successfully decoded, the turbo procedure is finished and may not care about further improvements as the goal is already achieved. Embodiments may further improve future estimates.

Furthermore, it is another finding that as cellular systems are usually interference limited, multi-user channel estimation, taking into account the interfering signals from other cells, may provide advantages. Here the LMMSE principle can also be used, but again receive signal statistics from other users may be obtained first. Due to even lower SINR as in the single user case this may involve the collection of even more TTIs as in the above reference paper and thus it may become prohibitive.

Embodiments are based on the finding that an improvement of channel estimation can be achieved using data-aided parameter estimation. Embodiments may improve MMSE multi-user channel estimation by data-aided improvement of signal statistic parameter estimation. Embodiments may work together with iterative channel estimation, improving the initial estimate. Embodiments may as well work together with non-iterative channel estimation. For example, successful transmissions of coded data can be identified by positive CRC. In embodiments, this data may be used to extract parameters for channel estimation. Embodiments may use a Wiener Filter, for example, and the estimation of second order statistics, like receive signal auto-covariance, channel auto-covariance etc., can harvest samples from these data symbols - treated as additional pilots - in addition to potentially available reference or pilot symbols.

For multiuser CoMP channel estimation embodiments may, in case the base station is in dire need of channel statistics (e.g. a particular user of interest has only recently become active and there are too few samples from pilot symbols only), poll past successful user data from a memory or from one or more neighbor cells (the current or previous serving cell of this user of interest) via a backhaul link. The embodiment at the base station of interest may now use this past data for obtaining additional samples for statistical parameter estimation. This can be especially attractive in case of rather weak signals of neighbor cells. In order to process those users in an MMSE receive combiner, both suppressing unwanted contributions and enhancing wanted contributions, accurate knowledge of their channels may be desired. If this is not available they can be treated as noise, which may limit the performance. Embodiments may provide improved channel parameter knowledge and the channel estimation performance may be improved. Thus, the receive combiner output SINR may be improved and thus the throughput of the system may be higher.

Embodiments provide an apparatus for a channel estimator of a base station transceiver of a mobile communication system. In other words, the apparatus may be adapted to or operable in a channel estimator; it may be operated or comprised in a channel estimator. The apparatus is therefore also referred to as channel estimator apparatus. Embodiments also provide a channel estimator comprising a channel estimator apparatus and a base station transceiver comprising said channel estimator.

The channel estimator apparatus may hence be part of a mobile communication system. The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers, relay station transceivers and base station transceivers. The relay station transceivers and base station transceivers can be composed of one or more central units and one or more remote units.

A mobile transceiver may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission and reception of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc. A relay station transceiver may correspond to an intermediate network node in the communication path between a base station transceiver and a mobile station transceiver. A relay station transceiver may forward a signal received from a mobile transceiver to a base station transceiver, signals received from the base station transceiver to the mobile station transceiver, respectively.

The mobile communication system may thus be cellular. The term cell refers to a coverage area of radio services provided by a transmission point, a remote unit, a remote head, a remote radio head, a base station transceiver or a NodeB, an eNodeB, respectively. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

In embodiments the apparatus comprises a receiver module operable to receive radio signals from a mobile transceiver using repetitive radio frames. The receiver module may be implemented as any means for receiving, which may comprise one or more receiver devices, one or more receiver units. In embodiments the receiver module may comprise typical receiver components such as one or more receive antennas, one or more filters, one or more mixers, one or more local oscillators, one or more analog/digital converters, one or more signal detectors, etc. In embodiments the channel estimator apparatus further comprises one or more memory modules operable to store samples of receive signals. The one or more memory modules can be implemented as any means for storing data such as random access memory, volatile memory, non-volatile memory, flash memory etc. The samples of the receive signal may correspond to digital samples, e.g. in-phase and quadrature baseband samples of the receive signal, samples of a high frequency receive signal, detected information bits, samples of any intermediate state in the processing chain, etc. Furthermore, the channel estimator apparatus further comprises a channel estimation module, which is operable to estimate a radio channel between the mobile transceiver and the base station transceiver based on stored samples of receive signals and reconstructed transmit symbols. In embodiments the channel estimation module can be implemented as any means for estimating, one or more channel estimation devices, one or more channel estimation units, a processor, a Digital Signal Processor (DSP), a multi-purpose processor, etc. Hence, the channel estimation module can be implemented as software, which is executable on accordingly adapted hardware.

Embodiments may provide the advantage that based on the stored samples of receive signals and reconstructed transmit symbols additional channel estimates or statistical channel properties can be determined which allow for a shorter warm-up period of the channel estimator and therewith provide a higher quality of the channel estimates. Based on the improved channel estimates an improved overall system performance may be achieved. Note that "shorter warm-up period" here means - as an example - achieving a satisfying accuracy of the statistical parameter knowledge in a shorter time than in conventional methods without the embodiment, where the improved accuracy of the statistical parameter knowledge goes along with a better total performance (e.g. in terms of throughput) of the channel estimator relying on this parameter knowledge.

In further embodiments the channel estimation module may be operable to estimate a radio channel of a current radio frame based on stored baseband samples of received radio signals of a previous radio frame and based on reconstructed transmit symbols of the previous radio frame. Hence, at a given base station transceiver or channel estimator the stored baseband samples of received radio signals may comprise information on the radio channel to be estimated although the signals of the mobile transceiver may not have been detected in the past at the given base station transceiver, e.g. because they have been detected at another base station transceiver or channel estimator the mobile transceiver has been served by before. By using the reconstructed transmit samples from the past, information on the mobile transceiver's radio channel can be extracted from the stored baseband samples. Said information can be used to achieve a faster warm-up of the radio channel estimator or a faster determination or convergence of the statistical properties used in the radio channel estimator. Embodiments may therewith provide the advantage that more information on a certain radio channel can be made available, which can be used to enhance channel estimation.

Some embodiments may use reconstructed transmit symbols, which are based on the stored received information bits of the previous radio frame. In some embodiments the channel estimator apparatus may further comprise an interface module, which is operable to receive information related to the reconstructed transmit symbols from another base station transceiver. The interface module may be implemented as any means for interfacing with the other base station transceiver in a direct or indirect way. The interface module may correspond to one or more interface units or devices and it may, for example, be implemented as an inter-base station communication interface such as the X2 in LTE, the Iur interface in UMTS, etc. Embodiments may therefore provide the advantage that data received or detected at another base station transceiver can be used to extract information related to a radio channel between the mobile transceiver and the channel estimator apparatus. This may be possible, because the radio signals from the mobile transceiver are received in a previous radio frame at the channel estimator apparatus although data of the mobile transceiver may not be detected in said previous frame. When data is supposed to be detected for the mobile transceiver in a current frame, additional radio channel information can be derived using the information on stored received signal samples of the previous frame and reconstructed transmit symbols of the previous frame, the reconstructed transmit symbols can be based on data detected for the mobile transceiver in the previous frame at the other base station transceiver. The reconstruction of the transmit symbols may be carried out at either one of the base station transceivers or it may be shared among the base station transceivers, and it may depend on the load or capacity on the communication interface, i.e. the interface module.

In further embodiments the mobile transceiver may be associated to a current serving cell which is operated by the base station transceiver. The reconstructed transmit symbols can be based on radio signals received from the mobile transceiver in a previous cell or serving cell, which is different from the current serving cell. The previous cell may be operated by another base station transceiver. The channel estimation module can be operable to reconstruct the transmit symbols based on previously detected information bits, which, according to the above description may have been detected by another cell or base station transceiver than a cell or base station transceiver the mobile transceiver is currently associated to. In some embodiments the channel estimation module can be operable to reconstruct the transmit symbols based on one or more operations from the group of re-encoding received information bits, re-modulating received information bits or symbols, remapping previously received information bits to transmission symbols, or transforming transmission symbols between time and frequency domain. That is to say the reconstructed transmit symbols may be based on detected information bits to which transmitter processing steps are applied in order to determine the transmit symbols, which have been transmitted to generate the receive signal based on which said information bits have been detected. Hence embodiments may provide the advantage that any detected information bits independent from where they have been received or detected can be used to enhance the channel estimation.

In some embodiments the channel estimation module can be operable to perform a cyclic redundancy check for data received in a previous radio frame and to reconstruct the transmit symbols based on the data received in the previous radio frame when the cyclic redundancy check is positive. In other words the channel estimation module can be operable to perform a plausibility check or a verification on detected information bits, before they are used as basis for enhancing the channel estimation. This may provide advantages in that only verified data is used and utilization of erroneous data can be avoided or reduced. The overall channel estimation quality may therewith be improved.

In further embodiments the channel estimation module can be operable to consider reliability information of information bits received in a previous radio frame and to reconstruct the transmit symbols based on the information bits received in the previous radio frame when the reliability information indicates a reliability of the information bits which lies above a threshold. For example, soft bits may be available for the information bits. Soft bits may comprise an estimation on the value of a bit together with reliability information on the bit, such as a probability indication for the estimation value to correspond to the true value. Such soft information can, for example, be available in terms of Likelihood-Ratios or Log-Likelihood-Ratios of the respective bits. The estimated value may, for example, be comprised in the sign information of the soft bit and the reliability information may be comprised in the actual value or magnitude of the soft bit. In some embodiments only soft bits or information bits may be used, for which at least a minimum reliability is indicated, which can, for example, be determined by comparing the magnitude or value of a soft bit to a threshold and consider a soft bit for reconstruction only if said reliability lies above the threshold. Embodiments may therewith provide the advantage that even soft bits can be used to improve the channel estimation and that utilization of unreliable information bits can be reduced or avoided. The warm-up period of the channel estimator may be further reduced as the additional channel information can be retrieved from the soft bits.

The channel estimation module may be further operable to determine second order statistical properties of the radio channel based on the stored samples of receive signals and the reconstructed transmit symbols. That is to say that the additional information obtained using embodiments may correspond to statistical information used in a channel estimator. Such statistical information may correspond to covariance values or matrices, correlation or autocorrelation values or matrices, cross-correlation values or matrices, auto covariance matrices etc. For example, when using a Wiener filter, the estimation of second order statistics, like receive signal auto-covariance, channel auto-covariance etc., can harvest samples from these data symbols - treated as additional pilots - in addition the available pilot symbols and the channel estimation may be further improved.

Embodiments further provide an apparatus for a base station transceiver of a mobile communication system, in line with the above. In other words the apparatus is operable to be comprised or operated by a base station transceiver. Embodiments may also provide a base station transceiver comprising such an apparatus. The apparatus may also be referred to as base station transceiver apparatus. The base station transceiver apparatus comprises a data reception module for receiving information bits from a mobile transceiver. The data reception module may correspond to one or more reception devices or units. The data reception module can be implemented as any means for receiving, for example, a receiver compliant to one or more of the above listed communication systems or standards. The receiver module may therefore comprise one or more typical receiver components such as one or more receive antennas, one or more filters, a low noise amplifier, a mixer, a local oscillator, an analog/digital converter, a data detector, etc. The base station transceiver apparatus further comprises an interface operable to provide information related to the received information bits to a channel estimator of another base station transceiver. The interface may correspond to one or more interface modules, devices or unit, and it may be implemented as any means for interfacing with the other base station transceiver in a direct or indirect way. The interface may be implemented as an inter-base station communication interface such as the X2 in LTE in line with the above description.

In further embodiments the base station transceiver apparatus may further comprise a reconstruction module operable to reconstruct transmit symbols based on the received information bits and the interface can operable to provide information on the reconstructed transmit symbols to the other base station transceiver, in line with the above description.

Embodiments further provide a method for a channel estimator of a base station transceiver of a mobile communication system. The method comprises receiving radio signals from a mobile transceiver using repetitive radio frames and storing samples of receive signals. The method further comprises estimating a radio channel between the mobile transceiver and the base station transceiver based on stored samples of receive signals and reconstructed transmit symbols.

Embodiments further provide a method for a base station transceiver of a mobile communication system. The method comprises receiving information bits from a mobile transceiver and providing information related to the received information bits to a channel estimator of another base station transceiver.

Embodiments further provide a computer program having a program code for performing one of the above methods, when the computer program is executed on a computer, processor or programmable hardware.

Embodiments may provide the advantage that channel estimation quality can be improved, which can be a major bottleneck, especially in CoMP systems. Embodiments may further provide the advantage that even with a Maximum Ratio Combiner (MRC) more than 1 dB gain in SINR at the receive combiner output may be achieved in case the channel estimation can built on second order statistics which has harvested enough samples. For an MMSE/Interference Rejection Combiner (IRC), even higher gains could be expected. Embodiments may help to get statistical parameters faster, e.g. a factor of 5 in LTE-A. Computational complexity may be eased as there is no strict real-time requirement for processing in at least some embodiments.

Brief description of the Figures

Some other features or aspects will be described using the following non-limiting embodiments of apparatuses and/or methods and/or computer programs by way of example only, and with reference to the accompanying figures, in which

Fig. 1    illustrates an embodiment of a channel estimator apparatus;

Fig. 2    illustrates simulation results of the quality of parameter estimation as a function of warm-up samples;

Fig. 3    shows an embodiment of a base station transceiver apparatus;

Fig. 4    shows an embodiment in a network scenario;

Fig. 5    shows another embodiment in a network scenario;

Fig.6    illustrates a block diagram of an embodiment of a method for a channel estimator; and

Fig.7    illustrates a block diagram of an embodiment of a method for a base station transceiver.

Description of some embodiments

Various embodiments will now be described in more detail with reference to the accompanying drawings. In the Figures, the thicknesses of lines, layers and/or regions may be exaggerated for clarity.

Accordingly, while embodiments are capable of various modifications and alternative forms, embodiments thereof are shown by way of example in the Figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the Figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple Figures carrying the same reference signs, but may not be described multiple times in detail. A detailed description of a component may then apply to that component for all its occurrences. In the following Figures optional components are shown in dashed lines.

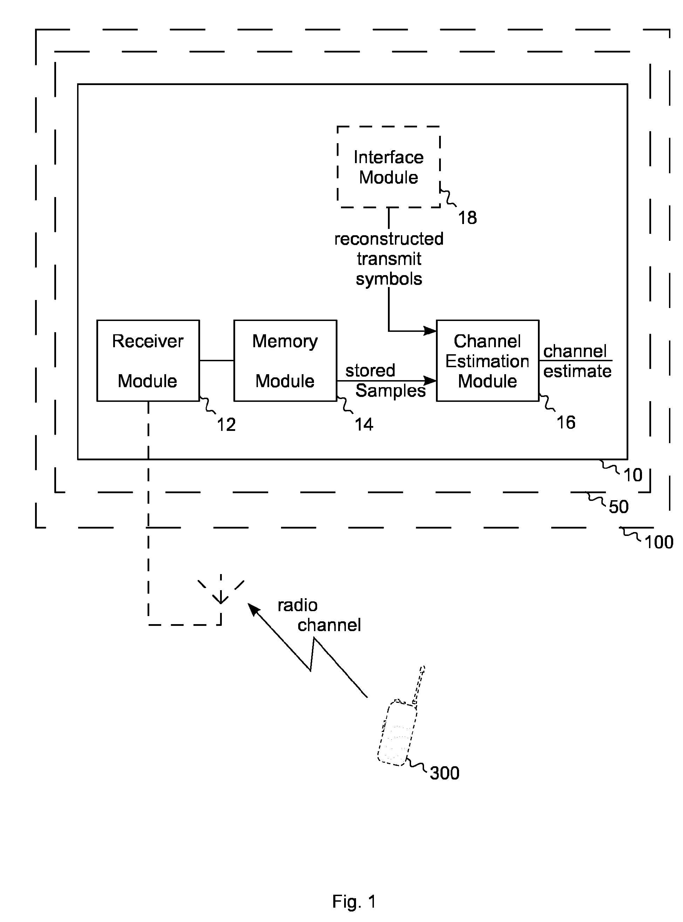

Fig. 1 illustrates an embodiment of a channel estimator apparatus 10. The apparatus 10 is comprised in a channel estimator 50 of a base station transceiver 100 of a mobile communication system. The mobile communication system can be assumed to be an LTE or LTE-A communication system. The channel estimator apparatus 10 comprises a receiver module 12 operable to receive radio signals from a mobile transceiver 300 using repetitive radio frames. The receiver module 12 is coupled to one or more memory modules 14, which are operable to store samples of receive signals. The one or more memory modules 14 are coupled to a channel estimation module 16, which is operable to estimate a radio channel between the mobile transceiver 300 and the base station transceiver 100 based on stored samples of receive signals and reconstructed transmit symbols.

In the following an embodiment of the channel estimation module 16 will be considered, which carries out channel estimation based on a Wiener Filter. Details on such Wiener Filter channel estimation, can be found in "Limits of Channel Estimation and Signal Combining for Multipoint Cellular Radio (CoMP)", L.-H. Nguyen, R. Rheinschmitt, T. Wild, S.T. Brink, in proceedings of IEEE ISWCS'11, Aachen, November 2011. The authors focus on a single serving base station, and a geometric ring arrangement of a number of supporting base stations. The channel estimator operates at very low Signal-to-Noise Ratio (SNR) to make use of CoMP by benefitting from many weak signal contributions. It is shown that conventional estimators based on least squares approaches, which are reasonable solutions for a single cell set-up, can cause severe degradation in the CoMP scenario. Rather, estimators are considered that implicitly de-weight ("pinch-off") unreliable signal contributions. For those MMSE-type estimators, a challenge is the practical parameter estimation of the auto- and cross-covariance. Details on a specific channel estimation algorithm as used in the present embodiment in the channel estimator module 16 can be found in chapter III of the above cited reference.

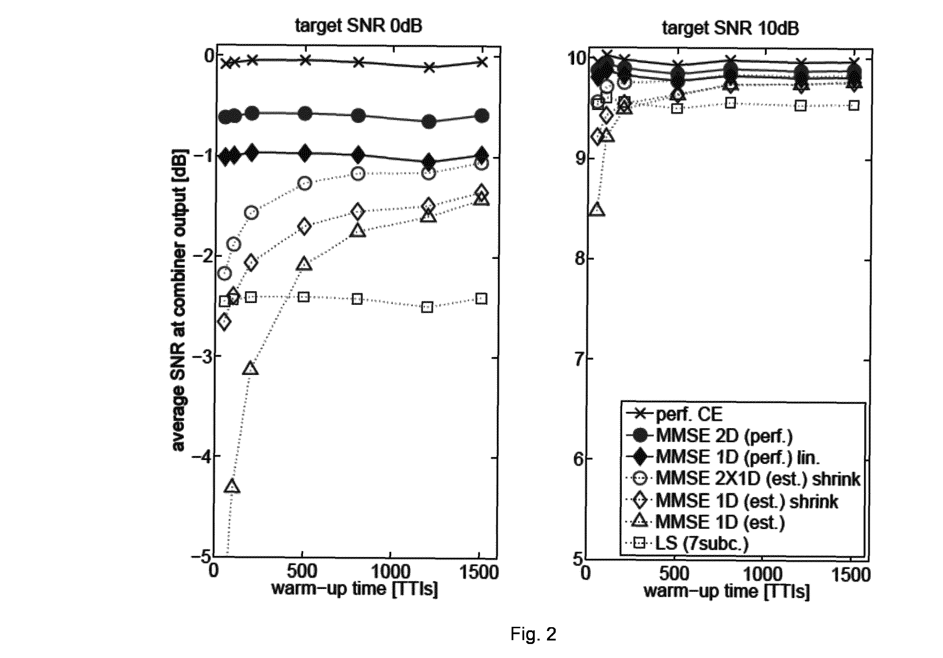

Fig. 2 illustrates the quality of parameter estimation as a function of warm-up samples. Fig. 2 is based on the above referenced channel estimation and illustrates the performance of pilot-based parameter estimation. Two view charts are depicted in Fig. 2, where the view chart on the left shows simulation results for a target SNR of 0dB and the view chart on the right shows simulation results for a target SNR of 10dB. Both view charts illustrate the average SNR at a combiner output in dB versus the number of Time Transmission Intervals (TTIs) in the respective warm-up time. For a cell edge mobile with SINR around 0 dB, a good estimator (dotted curve with empty circle markers on the left side), requires some time of "harvesting statistics" until it reaches its maximum performance with notable performance difference. In Fig. 2 the solid lines are with perfect parameter knowledge. In the above-cited publication the authors look at a simple single user case, considering MRC combining, and thus the performance gains for the multi-user case, with more susceptible MMSE combining, would be much larger than the gains shown in Fig. 2 for the single user example. In Fig. 2 the gains are the difference between an output SNR of about -2.2dB with close to zero warm-up time up to an SNR of about -1.05dB with around 1500TTIs (subframes) warm-up time, thus slightly larger than 1dB.

In Fig. 2 simulation results obtained for perfect channel estimation are compared to the performance of actual channel estimators with (a) perfect parameter knowledge, and (b) estimated parameter knowledge. Solid markers/solid lines denote estimators with perfect parameter knowledge, while outlined/empty markers/dashed lines represent estimators that apply estimated parameters only. The terms '2D' (solid circle markers) and '2x1D'(empty circle markers) indicate the Wiener filters of Sections III-C and III-D of the above referenced publication. '1D' (diamond and triangular markers) points out that the temporal channel statistics are not exploited, a linear interpolation is used instead. 'Shrink' (empty circles and diamonds) denotes that the shrinkage algorithm of equation (13) of the publication is used. For further details on the channel estimator the above-referenced publication shall be incorporated herein.

Fig. 2 shows that "harvesting" the statistics takes long "warm-up times" of about 200 TTIs, until the MMSE really becomes useful under the low SINR operation point of CoMP.

Furthermore, as cellular systems are usually interference limited, a multi-user channel estimation, taking into account the interfering signals from other cells may provide advantages. Here the LMMSE principle can also be used, but again signal statistics from other users are desired. Due to even lower SINR as in the single user case, this may take an even longer period or more TTIs as shown in Fig. 2 and thus may easily become prohibitive.

In the present embodiment an observation vector **y** collects samples of a received signal and is linearly combined with the complex-valued weight vector **w to** obtain a channel estimate $\hat{h} = w^T y$. In case of a Wiener filter, those weights are $\mathbf{w}^T = \Theta^T \Phi^{-1}$ thus are based on a cross-covariance vector $\Theta$ and a receive auto-covariance matrix $\Phi$. This auto-covariance

$$\mathbf{\Phi} = \mathbf{S}\mathbf{R}_{hh}\mathbf{S}^H + \mathbf{R}_{nn} = \mathbf{S}\mathbf{R}_{hh}\mathbf{S}^H + \sigma_n^2\mathbf{I} \quad \text{depends}$$

on the pilot sequence S, the channel covariance $R_{hh}$ and

the noise variance $\sigma_n^2$ — in the multiuser case, the first summand consists of a sum over multiple users.

A real world estimator needs access to those parameters, which in the academic world are often assumed to be perfectly known. E.g., the above reference publication describes methods to extract those parameters. For example, the pilot sequences **S** are known by the receiver by knowledge of scheduling information. Pilot sequences of neighbor cell users can be known by obtaining scheduling information from neighbor cell base stations, exchanged e.g. via backhaul, using some variant of the X2 interface. This means that, besides the

noise variance $\sigma_n^2$, an important unknown statistical parameter which can be targeted in this embodiment is the channel covariance matrix $\mathbf{R}_{hh}$. Finally, all methods depend on having enough samples for statistical accuracy. While the reference may only look at pilot-based parameter estimation, embodiments may use additional data symbols. That is to say, in embodiments the channel estimation module 16 can be operable to determined second order statistical properties of the radio channel based on the stored samples of receive signals and the reconstructed transmit symbols.

In the following an embodiment with single-cell processing will be considered first. Past receive samples, e.g. observation vectors of a few previous sub-frames, can be buffered for being able to re-pick them for parameter estimation. That is to say the channel estimation module 16 is operable to estimate a radio channel of a current radio frame based on stored baseband samples of received radio signals of a previous radio frame and based on reconstructed transmit symbols of the previous radio frame. The reconstructed transmit symbols can be based on the stored received information bits of the previous radio frame. Hence, the channel estimation module 16 can be operable to reconstruct the transmit symbols based on previously detected information bits.

In some embodiments it can be optionally checked, whether there is a need for additional samples in parameter estimation. If not, a processing complexity reduction is possible by skipping some of the subsequent processing steps. In some embodiments such checking can e.g. be done simply by a sample counter or by looking at alterations of the output results, i.e. verifying whether the statistics are stable, e.g. a threshold for a Frobenius norm of the difference of two subsequent covariance matrix estimates may be evaluated.

In case of a need, i.e. not enough samples and/or changes observed statistics detected, the next steps can be performed. In some embodiments a CRC check can be evaluated. That is to say, the channel estimation module 16 is operable to perform a CRC for data received in a previous radio frame. The transmit symbols may then be reconstructed based on the data received in the previous radio frame when the CRC check is positive. In other words, in case the CRC check is positive, past successfully received data can be used. In other embodiments, as will be detailed subsequently, it is also possible to use the decoder output result, even when it is not fully correctly decoded, i.e. with CRC negative. The same holds for successfully received control channel information.

From the received information bits, the transmitted data symbols are reconstructed, thus re-encoded, re-modulated, re-mapped etc. That is to say the channel estimation module 16 is operable to reconstruct the transmit symbols based on one or more operations from the group of re-encoding received information bits, re-modulating received information bits or symbols, remapping previously received information bits to transmission symbols, or transforming transmission symbols between the time and the frequency domain. For example, in case of SC-FDMA, like in the LTE uplink, also the Discrete Fourier Transform (DFT)-precoding can be redone as part of the reconstruction

In some embodiments another optional improvement can be carried out, namely, in case the DFT precoding results in symbols with very small amplitude (zero or close to zero), those symbols may not be useful for collection of statistics as they can be very noisy. Here an amplitude threshold can be used in some embodiments, and symbols, which are below this threshold, may be discarded as they may not be strong enough in order to contribute in a useful way. Note that in the LTE/LTE-A uplink there may be 7 times more data OFDM symbols than pilot OFDM symbols. Even with a BLock Error Rate (BLER) of about 16%, there may be 5 times more statistics using those additional successfully received data symbols than the pure pilot symbols.

Some embodiments may share the same variables for data-aided and pure pilot based channel processing. For example, a sliding window may be moved over the data symbols in subsequent radio frames, which has the same relative resource element position arrangement as the original pilot symbols. That is to say, for example, the data symbols in the window are pre-compensated, thus their complex receive value is divided by the known/estimated data symbol, compensating the phase rotations and amplitude variations of e.g. Quadrature Amplitude Modulated (QAM) symbols and just leaving in place the remaining phase and amplitude variations of the radio channel for this particular OFDM resource element. This may allow, e.g., simply to accumulate up the sample auto-covariance.

Embodiments may therewith provide the following advantages. There may not be strict real-time requirements. The computation of channel statistics may be done as a background task in case processing resources are available. As the computation may be done offline there may be no strict scheduling requirements in terms of processing. That is to say processing resources can be assigned for the respective computation with some delay tolerance. The channel auto-covariance may only depend on relative distance in time and frequency and not on absolute positions. This means, also received signals on a different frequency location, i.e. different Physical Resource Blocks (PRBs) may be used. As an optional improvement, some embodiments may use past data to increase the observation vector and thereby consider further channel information. In case neither strict real-time processing, nor scheduling requirements are a problem, embodiments may use the following additional feature: While the above mentioned steps improve the estimation of cross- and auto-covariance and thus the Wiener filter weight vector w , if the additional reconstructed data-symbols are close in time and frequency, in relation to channel coherence bandwidth and coherence time, to the current observation vector **y**, embodiments may extend the observation vector to a much larger y' including the observed past data symbols, which now act directly as additional pilots.

Embodiments may additionally or alternatively use soft-outputs to determine additional information for the channel estimation. In principle it is also possible to use the decoder output result, even when it is not fully correctly decoded, e.g. when CRC is negative. In such an embodiment the channel estimation module 16 is operable to consider reliability information of information bits received in a previous radio frame and to reconstruct the transmit symbols based on the information bits received in the previous radio frame when the reliability information indicates a reliability of the information bits which lies above a threshold. For example, an embodiment may concentrate on Log-Likelihood-Ratios (LLRs) of the decoder output. Bits with low LLRs may indicate unreliable decoder estimates. A threshold for data symbols composed of a suitable metric may be introduced, such as e.g. the sum of contributing bits, or the weakest bit, or any weighted function thereof, and data symbols which are judged as unreliable by being below the threshold are discarded. The remaining data symbols can then be used for estimating the channel statistics in the present embodiment.

In the following embodiments employing multi-cell channel estimation will be considered. The following embodiments may use the same processing steps as described above. To support the estimation of weaker cross-links between users and their non-serving base station, additional steps are taken, as will be explained in detail subsequently. As indicated in Fig. 1 the channel estimation apparatus 10 may comprise an interface module 18, which is operable to receive information related to the reconstructed transmit symbols from another base station transceiver 200. The information related to the reconstructed transmit symbols may comprise information on detected information bits, which can then be reconstructed at the channel estimator 50, or it may comprise information on already reconstructed transmit symbols. In other words embodiments may differ in where the actual reconstruction takes place. In some embodiments the reconstruction can be carried out in the channel estimation module 16, in other embodiments the reconstruction may be carried out at the other base station transceiver 200 or the reconstruction may be partly carried out at both base station transceivers 100, 200.

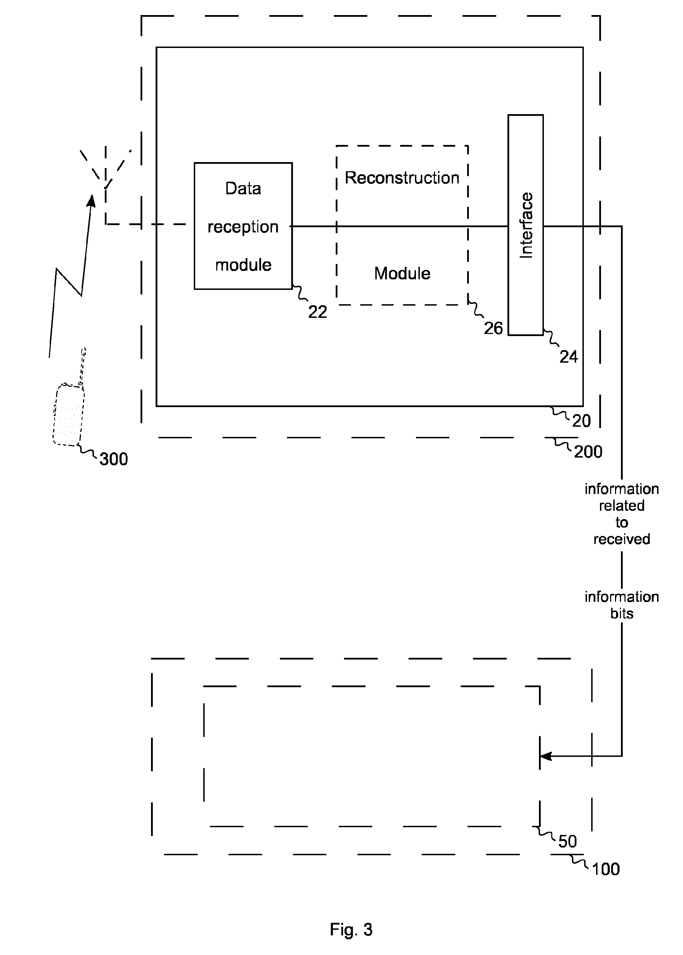

Fig. 3 illustrates an embodiment of an apparatus 20 for a base station transceiver 200 of a mobile communication system, which is assumed an LTE or an LTE-A system in the present embodiment. The base station transceiver apparatus 20 comprises a data reception module 22 for receiving information bits from a mobile transceiver 300. As shown in Fig. 3 the data reception module may correspond to a receiver and it may be coupled to or comprise one or more receive antennas. Moreover, the data reception module 22 is coupled to an interface 24, which is operable to provide information related to the received information bits to a channel estimator 50 of another base station transceiver 100. In the present embodiment the interface 24 may correspond to an X2 interface.

In line with the above description the apparatus 20 may further comprise a reconstruction module 26 operable to reconstruct transmit symbols based on the received information bits and the interface 24 can be operable to provide information on the reconstructed transmit symbols to the other base station transceiver 100. Hence the base station transceiver apparatus 20 may provide reconstructed transmit symbols or detected information bits and the channel estimation module 16 is operable to reconstruct the transmit symbols based on the previously detected information bits from the other base station transceiver 200.

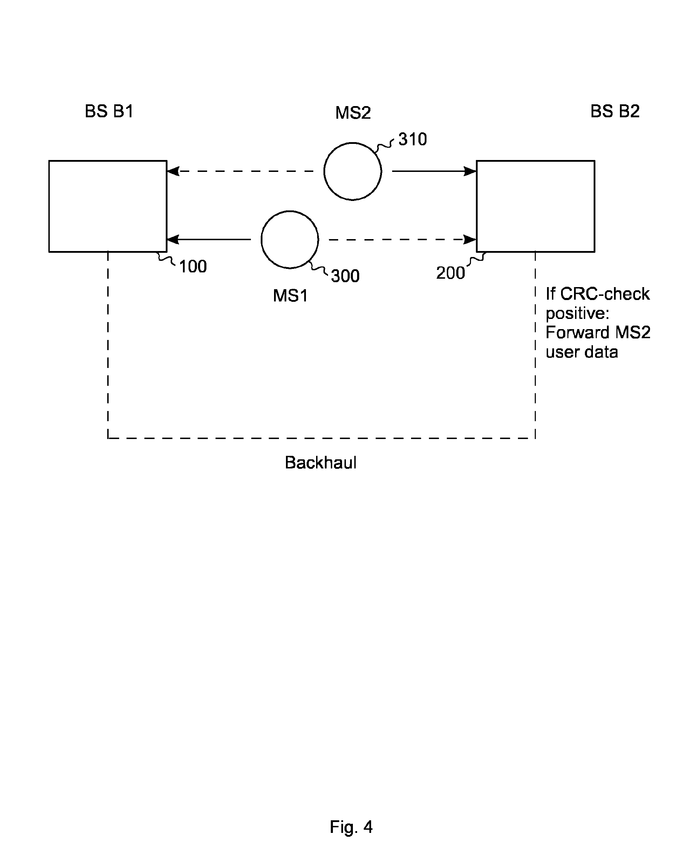

Fig. 4 shows another embodiment in a network scenario. Fig. 4 shows two base station transceivers 100 and 200, which act as serving cells to two mobile transceivers 300 and 310. Fig. 4 depicts a basic principle of a multi-cell embodiment. Base station B1 100 is the serving cell node for mobile station MS1 300 and base station B2 is the serving node for MS2 310. Links to serving cells are indicated by solid lines. Cross-links are marked by dashed lines. Those interfering links, i.e. the "interference" evoked by the cross-links, can be suppressed by MMSE receive antenna combiners. In case of CoMP, they can additionally be used for joint reception. The backhaul allows to forward successfully received user data between the base stations 100 and 200, in case the channel statistics of the cross-links are not yet accurately known. Each base station may then exploit this additional data as extra samples for parameter estimation, e.g. for 2nd order statistics needed for an LMMSE channel estimator.

Another embodiment may relate to handover of a mobile transceiver 300, e.g. from a cell of base station transceiver 200 to a cell of base station transceiver 100. The mobile transceiver 300 is then associated to a current serving cell, which is operated by the base station transceiver 100. The reconstructed transmit symbols are based on radio signals received from the mobile transceiver 300 in a previous serving cell, which is different from the current serving cell and operated by base station transceiver 200 in the present embodiment. For example, the target handover cell 100 obtains from the source handover cell 200 the past reconstructed transmit symbols or past successfully received user data plus side-information, like the used modulation and coding scheme. Then the target handover cell 100 uses its stored past receive samples from the memory 14 and now can recompute the statistics of the radio channel of the handovering mobile 300 to the target base station 100. This results in the fact that the handover target base station 100 now has statistical channel information to a mobile 300, even when it did not handle any traffic of this mobile 300 before. In other embodiments both cell may be operated by the same base station transceiver and the reconstructed transmit symbols may be transferred internally of said base station transceiver.

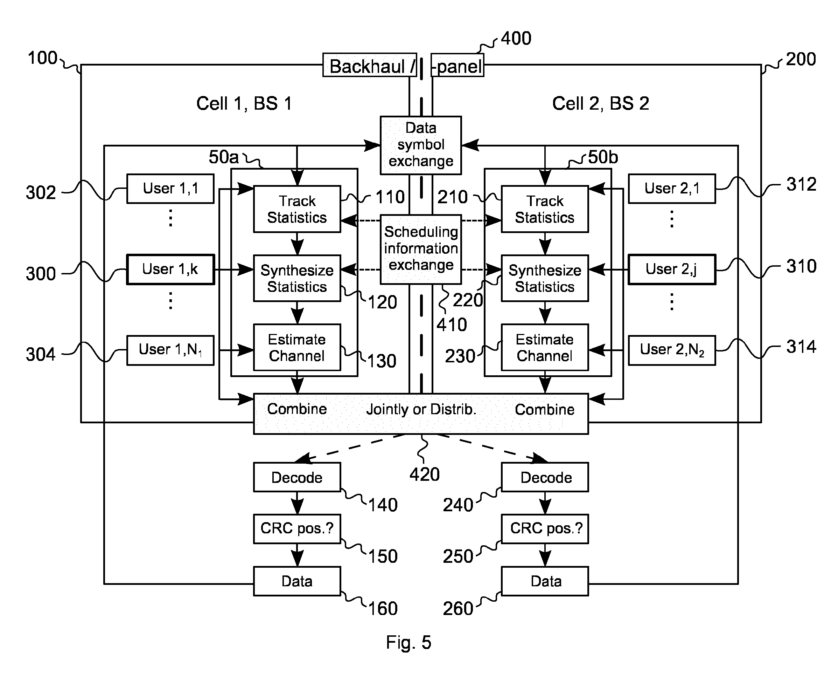

Fig. 5 shows another embodiment in a network scenario. Fig. 5 illustrates two base station transceivers 100 and 200 operating different cells, Cell 1 and Cell 2. Users 300, 302, 304, also labeled as User 1,1, User 1,k, and User 1,$N_1$, are associated or assigned to Cell 1 and base station transceiver 100. Users 310, 312, 314, also labeled as User 2,1, User 1,k, and User 2, $N_2$, are associated or assigned to Cell 2 and base station transceiver 200. Between the two base station transceivers 100 and 200 there is a backhaul network, which allows for communication between the base station transceivers 100, 200. Fig. 5 illustrates a data symbol exchange 400, scheduling information exchange 410 and potential joint or distributed processing 420 between the base station transceivers 100, 200. At each of the base station transceivers channel statistics are tracked 110, 210. Moreover, channel statistics are synthesized 120, 220; and the corresponding radio channels are estimated 130, 230. These operations are carried out in two channel estimators 50a and 50b according to the above description, one of which is comprised in each of the base station transceivers 100,200.

Fig. 5 corresponds to a block diagram illustrating a multi-cell embodiment. This example embodiment is reduced to 2 cells. As shown in Fig. 5 each of the cells further comprises a decoding block 140, 240, a CRC check 150, 250, and a data storage 160, 260, which is coupled to the data symbol exchange 400. In case the CRC is positive 150, 250, the user data, here actual data symbols - but could also be information bits, which had to be re-encoded, re-modulated and re-mapped, are exchanged via backhaul or backpanel as indicated by blocks 160, 260 and 400. This can be done in case there is still a need of "warm-up", i.e. more samples for parameter estimation are made available. Those data symbols are used to serve as additional pilots. The second order statistics ae tracked for the particular users 300, 310 of interest as indicated by blocks 110 and 210. The receive combining 420 can happen jointly across both cells or distributed, independently at each cell. In both cases the additional statistics gained by the data symbols may improve the result.

In CoMP joint reception, the cross-links are also collected as useful signal parts from so-called supporting cells. In the absence of CoMP joint reception, multi-cell channel estimation may still be helpful, as those cross-links are part of the spatial interference, which can be suppressed by an MMSE receive combiner, in case this spatial information is available in the form of channel estimates of interfering links. In embodiments the base station transceiver 100 or the channel estimator 50, the channel estimation apparatus 10, respectively, may check, whether additional samples for parameter estimation would be beneficial from neighbor cells, e.g. by evaluating changes in the statistical properties of the respective values or matrices, e.g. by evaluating a threshold for a Frobenius norm of the difference of two subsequent covariance matrix estimates, which is similar to the single cell case or embodiment as described above.

Furthermore, in embodiments the base station transceiver 100 B1 or the channel estimator 50 may poll this information from neighbor cell B2, i.e. base station transceiver 200, in some embodiments from more than one neighbor or other base station transceivers. The neighbor cell B2/ base station transceiver 200, i.e. the apparatus 20, sends its past successfully received user data from the user(s) of interest. For the exchange of past user data, there are multiple options in embodiments. In case the tolerable backhaul load is small, cell2 B2, i.e. base station transceiver apparatus 20, sends information bits of the user of interest, which were correctly decoded, optionally together with a set of reconstruction parameters, such as modulation order, occupied PRBs, scrambling sequence indices etc. Optionally soft bits at the decoder output, even if CRC check was negative, may be provided by the base station transceiver apparatus 20. These information bits are used at cell 1 B1, i.e. at the channel estimation apparatus 10, in conjunction with the reconstruction parameters to rebuild the data symbols by re-encoding, re-modulation, re-mapping etc.

In case the tolerable backhaul load is not so strict or rather low and the processing power at cell1 B1, i.e. at the base station transceiver 100 or the apparatus 10 is a bottleneck, cell 2 B2 reconstructs the transmitted data symbols, i.e. the reconstruction module 26, and sends them to cell 1 B1 using the interface 24. In case of centralized or partly centralized CoMP processing, those multi-cell processing steps can (partly) occur at the same processing entity, dealing with multiple cells. Moreover, in some embodiments there may be a backhaul-load based mechanism for switching between whether the reconstruction of the transmit data symbols is carried out at the reconstruction module 26 at the base station transceiver apparatus 20 or at the channel estimation module 16.

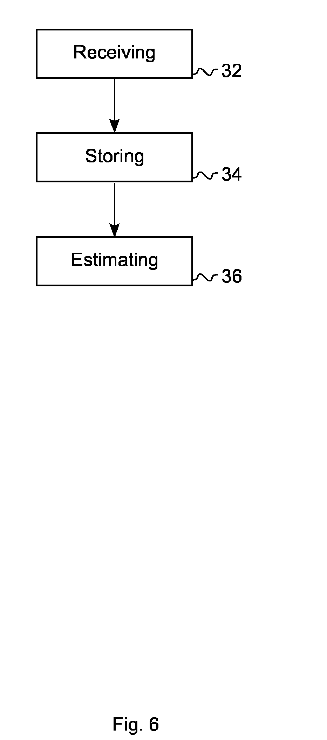

Fig.6 illustrates a block diagram of an embodiment of a method for a channel estimator of a base station transceiver 100 of a mobile communication system. The method comprises a step of receiving 32 radio signals from a mobile transceiver using repetitive radio frames and a step of storing 34 samples of receive signals. The method further comprises a step of estimating 36 a radio channel between the mobile transceiver and the base station transceiver based on stored samples of receive signals and reconstructed transmit symbols.

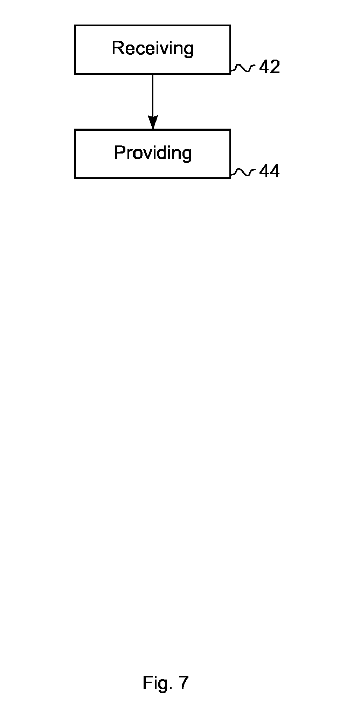

Fig.7 illustrates a block diagram of an embodiment of a method for a base station transceiver 200 of a mobile communication system. The method comprises a step of receiving 42 information bits from a mobile transceiver and a step of providing 44 information related to the received information bits to a channel estimator of another base station transceiver 100.

Embodiments further provide a computer program having a program code for performing one of the above methods, when the computer program is executed on a computer, processor or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for storing", "means for interfacing", "means for estimating", etc., may be provided through the use of dedicated hardware, such as "a receiver", "a storage or memory", "an interface", "an estimator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (10) for a channel estimator (50) of a base station transceiver (100) of a mobile communication system, the apparatus (10) comprises a receiver module (12) operable to receive radio signals from a mobile transceiver (300) using repetitive radio frames;
one or more memory modules (14) operable to store samples of receive signals; and
a channel estimation module (16) operable to estimate a radio channel between the mobile transceiver (300) and the base station transceiver (100) based on stored samples of receive signals and reconstructed transmit symbols.

2. The apparatus (10) of claim 1, wherein the channel estimation module (16) is operable to estimate a radio channel of a current radio frame based on stored baseband samples of received radio signals of a previous radio frame and based on reconstructed transmit symbols of the previous radio frame.

3. The apparatus (10) of claim 2, wherein the reconstructed transmit symbols are based on the stored received information bits of the previous radio frame.

4. The apparatus (10) of claim 1, further comprising an interface module (18), which is operable to receive information related to the reconstructed transmit symbols from another base station transceiver (200).

5. The apparatus (10) of claim 1, wherein the mobile transceiver (300) is associated to a current serving cell, which is operated by the base station transceiver (100), and wherein the reconstructed transmit symbols are based on radio signals received from the mobile transceiver (300) in a previous serving cell, which is different from the current serving cell.

**6.** The apparatus (10) of claim 1, wherein the channel estimation module (16) is operable to reconstruct the transmit symbols based on previously detected information bits.

**7.** The apparatus (10) of claim 5, wherein the channel estimation module (16) is operable to reconstruct the transmit symbols based on one or more operations from the group of re-encoding received information bits, re-modulating received information bits or symbols, remapping previously received information bits to transmission symbols, or transforming transmission symbols between time and frequency domain.

**8.** The apparatus (10) of claim 1, wherein the channel estimation module (16) is operable to perform a cyclic redundancy check for data received in a previous radio frame and to reconstruct the transmit symbols based on the data received in the previous radio frame when the cyclic redundancy check is positive.

**9.** The apparatus (10) of claim 1, wherein the channel estimation module (16) is operable to consider reliability information of information bits received in a previous radio frame and to reconstruct the transmit symbols based on the information bits received in the previous radio frame when the reliability information indicates a reliability of the information bits which lies above a threshold.

**10.** The apparatus (10) of claim 1, wherein the channel estimation module (16) is operable to determine second order statistical properties of the radio channel based on the stored samples of receive signals and the reconstructed transmit symbols.

**11.** An apparatus (20) for a base station transceiver (200) of a mobile communication system, the apparatus (20) comprises
a data reception module (22) for receiving information bits from a mobile transceiver (300); and
an interface (24) operable to provide information related to the received information bits to a channel estimator (50) of another base station transceiver (100).

**12.** The apparatus (20) of claim 11, further comprising a reconstruction module (26) operable to reconstruct transmit symbols based on the received information bits and wherein the interface (24) is operable to provide information on the reconstructed transmit symbols to the other base station transceiver (100).

**13.** A method for a channel estimator of a base station transceiver (100) of a mobile communication system, the method comprising
receiving (32) radio signals from a mobile transceiver (300) using repetitive radio frames;

storing (34) samples of receive signals; and estimating (36) a radio channel between the mobile transceiver (300) and the base station transceiver (100) based on stored samples of receive signals and reconstructed transmit symbols.

**14.** A method for a base station transceiver (200) of a mobile communication system, the method comprising
receiving (42) information bits from a mobile transceiver (300); and
providing (44) information related to the received information bits to a channel estimator of another base station transceiver (100).

**15.** A computer program having a program code for performing one of the methods of claims 13 or 14, when the computer program is executed on a computer, processor or programmable hardware.

**Amended claims in accordance with Rule 137(2) EPC.**

**1.** An apparatus (10) for a channel estimator (50) of a base station transceiver (100) of a mobile communication system, the apparatus (10) comprises a receiver module (12) operable to receive radio signals from a mobile transceiver (300) using repetitive radio frames;
one or more memory modules (14) operable to store samples of receive signals; and a channel estimation module (16) operable to estimate a radio channel of a current radio frame between the mobile transceiver (300) and the base station transceiver (100) based on stored samples of receive signals and based on reconstructed transmit symbols of a previous radio frame, wherein the data of the mobile transceiver (300) has been detected at another base station transceiver (200) in the previous radio frame.

**2.** The apparatus (10) of claim 1, wherein the mobile transceiver (300) has been associated to a cell of the other base station transceiver (200) in the previous radio frame and wherein the mobile transceiver (300) is associated to a cell of the base station transceiver (100) in the current radio frame.

**3.** The apparatus (10) of claim 1, wherein the reconstructed transmit symbols are based on the stored received information bits of the previous radio frame.

**4.** The apparatus (10) of claim 1, further comprising an interface module (18), which is operable to receive information related to the reconstructed transmit symbols from another base station transceiver (200).

**5.** The apparatus (10) of claim 1, wherein the mobile transceiver (300) is associated to a current serving cell, which is operated by the base station transceiver (100), and wherein the reconstructed transmit symbols are based on radio signals received from the mobile transceiver (300) in a previous serving cell, which is different from the current serving cell.

**6.** The apparatus (10) of claim 1, wherein the channel estimation module (16) is operable to reconstruct the transmit symbols based on previously detected information bits.

**7.** The apparatus (10) of claim 5, wherein the channel estimation module (16) is operable to reconstruct the transmit symbols based on one or more operations from the group of re-encoding received information bits, re-modulating received information bits or symbols, remapping previously received information bits to transmission symbols, or transforming transmission symbols between time and frequency domain.

**8.** The apparatus (10) of claim 1, wherein the channel estimation module (16) is operable to perform a cyclic redundancy check for data received in a previous radio frame and to reconstruct the transmit symbols based on the data received in the previous radio frame when the cyclic redundancy check is positive.

**9.** The apparatus (10) of claim 1, wherein the channel estimation module (16) is operable to consider reliability information of information bits received in a previous radio frame and to reconstruct the transmit symbols based on the information bits received in the previous radio frame when the reliability information indicates a reliability of the information bits which lies above a threshold.

**10.** The apparatus (10) of claim 1, wherein the channel estimation module (16) is operable to determine second order statistical properties of the radio channel based on the stored samples of receive signals and the reconstructed transmit symbols.

**11.** An apparatus (20) for a base station transceiver (200) of a mobile communication system, the apparatus (20) comprises
a data reception module (22) for receiving information bits from a mobile transceiver (300);
an interface (24) operable to provide information related to the received information bits to a channel estimator (50) of another base station transceiver (100); and
a reconstruction module (26) operable to reconstruct transmit symbols based on the received information bits and wherein the interface (24) is operable to provide information on the reconstructed transmit symbols to the other base station transceiver (100).

**12.** The apparatus (20) of claim 11, wherein the mobile transceiver (300) has been associated to a cell of the base station transceiver (200) in a previous radio frame and wherein the mobile transceiver (300) is associated to a cell of the other base station transceiver (100) in the current radio frame.

**13.** A method for a channel estimator of a base station transceiver (100) of a mobile communication system, the method comprising
receiving (32) radio signals from a mobile transceiver (300) using repetitive radio frames;
storing (34) samples of receive signals; and
estimating (36) a radio channel a current radio frame between the mobile transceiver (300) and the base station transceiver (100) based on stored samples of receive signals of a previous radio frame and based on reconstructed transmit symbols of the previous radio frame, wherein the data of the mobile transceiver (300) has been detected at another base station transceiver (200) in the previous radio frame.

**14.** A method for a base station transceiver (200) of a mobile communication system, the method comprising
receiving (42) information bits from a mobile transceiver (300);
providing (44) information related to the received information bits to a channel estimator of another base station transceiver (100); and
reconstructing transmit symbols based on the received information bits and providing information on the reconstructed transmit symbols to the other base station transceiver (100).

**15.** A computer program having a program code for performing one of the methods of claims 13 or 14, when the computer program is executed on a computer, processor or programmable hardware.

Fig. 1

Fig. 2

Fig. 3

BS B1                                MS2                                BS B2

100          300                      200          If CRC-check
                                                   positive:
             MS1                                   Forward MS2
                                                   user data

Backhaul

Fig. 4

Fig. 5

Fig. 6

Receiving ~42

Providing ~44

Fig. 7

Europäisches
Patentamt

European
Patent Office

Office européen
des brevets

## EUROPEAN SEARCH REPORT

Application Number

EP 13 30 5042

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/040088 A1 (COHDA WIRELESS PTY LTD [AU]; ALEXANDER PAUL DEAN [AU]; GRAY PAUL KINGS) 10 April 2008 (2008-04-10) | 1-3, 6-10,13, 15 | INV. H04L25/02 |
| Y | * page 11, line 4 - line 21 * * page 13, line 19 - line 30 * * page 14, line 16 - line 18 * * page 15, line 28 - line 17 * * page 18, line 14 - line 22 * * claims 8-10 * * figures 6,7,11-13,18,19 * | 4,5 | |
| X | EP 1 564 908 A1 (ERICSSON TELEFON AB L M [SE]) 17 August 2005 (2005-08-17) | 11,12, 14,15 | |
| Y | * paragraph [0022] - paragraph [0023] * * paragraph [0039] * * paragraph [0050] - paragraph [0051] * * paragraph [0042] * * paragraph [0053] * * paragraph [0054] * * paragraph [0066] * * figure 7 * | 4,5 | TECHNICAL FIELDS SEARCHED (IPC) |
| X | US 2010/034110 A1 (KIM SEONG-RAG [KR] ET AL) 11 February 2010 (2010-02-11) * paragraph [0010] - paragraph [0011] * * paragraph [0035] * * paragraph [0059] * * paragraph [0101] - paragraph [0104] * * paragraph [0113] - paragraph [0120] * * figure 6 * | 1-3,6,7, 9,13,15 | H04L |
| X | WO 2007/112489 A1 (NAT ICT AUSTRALIA LTD [AU]; ZHAO MING [AU]; SHI ZHENNING [AU]; REED MA) 11 October 2007 (2007-10-11) * page 5, line 1 - line 19 * * claims 1,4 * * figure 1 * | 1,6,7,9, 10,13,15 | |

The present search report has been drawn up for all claims

| Place of search | Date of completion of the search | Examiner |
|---|---|---|
| The Hague | 5 April 2013 | Moreno, Marta |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 30 5042

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2013

| Patent document cited in search report | | Publication date | Patent family member(s) | | Publication date |
|---|---|---|---|---|---|
| WO 2008040088 | A1 | 10-04-2008 | AU | 2007304830 A1 | 10-04-2008 |
| | | | CA | 2667026 A1 | 10-04-2008 |
| | | | CN | 102984098 A | 20-03-2013 |
| | | | EP | 2078339 A1 | 15-07-2009 |
| | | | JP | 2010506463 A | 25-02-2010 |
| | | | KR | 20090083365 A | 03-08-2009 |
| | | | US | 2010091920 A1 | 15-04-2010 |
| | | | WO | 2008040088 A1 | 10-04-2008 |
| EP 1564908 | A1 | 17-08-2005 | AT | 385661 T | 15-02-2008 |
| | | | DE | 602004011687 T2 | 12-06-2008 |
| | | | EP | 1564908 A1 | 17-08-2005 |
| | | | EP | 1714518 A1 | 25-10-2006 |
| | | | ES | 2299907 T3 | 01-06-2008 |
| | | | KR | 20060107817 A | 16-10-2006 |
| | | | US | 2007054621 A1 | 08-03-2007 |
| | | | US | 2010098014 A1 | 22-04-2010 |
| | | | WO | 2005064975 A1 | 14-07-2005 |
| US 2010034110 | A1 | 11-02-2010 | KR | 20080050205 A | 05-06-2008 |
| | | | US | 2010034110 A1 | 11-02-2010 |
| WO 2007112489 | A1 | 11-10-2007 | AU | 2007233563 A1 | 11-10-2007 |
| | | | EP | 2002622 A1 | 17-12-2008 |
| | | | JP | 2009532957 A | 10-09-2009 |
| | | | KR | 20080108591 A | 15-12-2008 |
| | | | US | 2009103666 A1 | 23-04-2009 |
| | | | WO | 2007112489 A1 | 11-10-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L.-H. NGUYEN ; R. RHEINSCHMITT ; T. WILD ; S.T. BRINK.** Limits of Channel Estimation and Signal Combining for Multipoint Cellular Radio (CoMP. *proceedings of IEEE ISWCS'11,* November 2011